# EUROPEAN PATENT SPECIFICATION

(11) **EP 2 074 002 B1**
(45) Date of publication and mention of the grant of the patent: **01.09.2010**
(21) Application number: 07824989.3
(22) Date of filing: 25.10.2007
(51) Int. Cl.: B60S 9/02

(54) **SAFETY SYSTEM FOR VEHICLES**
SICHERHEITSSYSTEM FÜR FAHRZEUGE
SYSTEME DE SECURITE POUR VEHICULES

(30) Priority: 27.10.2006 HU 0600811
(43) Date of publication of application: 01.07.2009
(73) Proprietor: Horváth, Imre, 7632 Pécs (HU)
(72) Inventor: Horváth, Imre, 7632 Pécs (HU)
(74) Representative: Farkas, Tamas
(86) International application number: PCT/HU2007/000097
(87) International publication number: WO 2008/050163

(56) References cited:
- AT-B- 388 360
- CH-A5- 640 791
- US-B1- 6 619 693

## Description

The subject of the invention is a safety system for vehicles making possible, that in case of tipping over or tilting of vehicles, the system senses the substantial shift of the vehicle from the basic position, puts back the vehicle automatically to its original position, or from a horizontal position into a partially standing position, ensuring that passengers stuck into the vehicle can be freed.

During accidents on the roads it occurs very frequently that vehicles tip out of their original position, that is they tilt sideways, or in the mountains to the hillside adjoining the road, or even in the opposite, falling into the ditch next to the road, they tilt to their splay part. Quick and efficient rescuing of the passengers stuck in the vehicles tilted sideways due to the accident is almost impossible in the given situation, as the windows on the sides ensuring the only possibility of escape are not accessible. Moreover especially in case of coaches through the newly taken position the rows of seats create severe obstacle in the vehicle tilted sideways. These cases it often occurs, that the passengers stuck in the vehicle can not get out of it due to the injury of the vehicle and they can be rescued only after the vehicle has been tilted back to standing position. However this movement can be very lengthy, so saving and attending to the injured can take place with a delay, so the accident of a vehicle tilted from its position can often demand human life.

The HU 204 471 patent description makes known a tilting structure for vehicles, which has a horizontal basic frame with two parallel levers with a distance between them, which join rotatably around horizontally bedded pivots, where the levers are supported by a lifting structure in the surroundings of their center of gravity. The essence of the solution is, that the levers are provided on their both ends with a bedding. housing a pivot, making it possible, that they can be tilted in alternative directions to one or the other side of the basic frame rotatably around the pivots.

The HU 451 utility sample describes a lifting equipment primarily for motor vehicles, which has a parallelogram structure of four joints made by two adjoining foot-lifting bridge-levers, which has a telescopic support feet placed as one of the diagonals of one of the paralelogram structures.

The HU 454 utility sample description makes known a lifting equipment with pillars primarily for motor vehicles, which has a wired control structure and an oiler equipment of self-absorbing system joining the lifting reel, characterized by that, it has a hollow pillar enclosing the lifting reel with a flooring surface of mostly pentagon cross-section with a hollow pillar with a lengthwise opening on one side.

US-B-6619693 discloses a vehicle jacking system according to the preamble of claim 1.

The disadvantages of the known solutions are, that they are suitable for changing the position of vehicles only under operating conditions, they do not make possible the returning of the vehicle into basic position in case of tipping over or tilting resulting from accidents.

When working out the solution according to the invention we aimed to create a safety system of several joining units, which is suitable for automatic tilting out respectively tilting back of motor vehicles tilting sideways resulting from accidents, especially regarding coaches, ensuring this way the quick and efficient rescuing of passengers stuck in the vehicle.

When working out the solution, we realized, that in case a sensor equipment is placed in the vehicle, which can accurately detect the tilting or tipping over of the vehicle from its basic position, following this, it can activate the equipment built in the vehicle to put it back partially or fully to its original position, then the set aim can be achieved.

The invention is a safety system for vehicles making possible, that in case of tipping over or tilting of vehicles, the system lifts the vehicle, respectively puts back the vehicle to its original position, and the safety system for vehicles consists of a sensor unit monitoring the position of the vehicle and a lifting unit controlled by the sensor unit, as well as a lifting structure placed in the lifting unit, and the lifting unit including the lifting structure is placed on the upper part of the vehicle, preferably on the top of it, in given case it is fixed to its upper frame, and it is controlled by the sensor unit placed inside the vehicle.

In one preferred embodiment of the solution according to the invention each lifting unit includes two lifting structures, that are placed on the right and left hand side of the longitudinal axis of the vehicle.

In a further preferred embodiment of the solution according to the invention on the upper part, or to the top of the vehicle two or more lifting units in the longitudinal axis of the vehicle are fixed.

In a further preferred embodiment of the solution according to the invention the operation of the lifting structure is hydraulic, or mechanical or electric.

In a further preferred embodiment of the solution according to the invention the lifting structure is realized by a telescopic system, and/or a mechanical lever consisting of one or more parts and joints.

The solution according to the invention is furthermore set forth by the enclosed drawings:
The Fig 1 shows the vehicle according to the invention equipped with the safety system from back view.
The Fig 2 shows the vehicle according to the invention equipped with the safety system from top view.
The Fig 3 shows a possible embodiment of the vehicle according to the invention equipped with the safety system from top view during the use of the lifting structure.
The Fig 4 shows another possible embodiment of the vehicle according to the invention equipped with the safety system from top view during the use of the lifting structure.
The Fig 5 shows a possible preferable embodiment of the solution according to the invention in case of a tilting towards a lesser splayed part.
The Fig 6 shows another possible preferable embodiment of the solution according to the invention in case of a complete tilting towards the side.

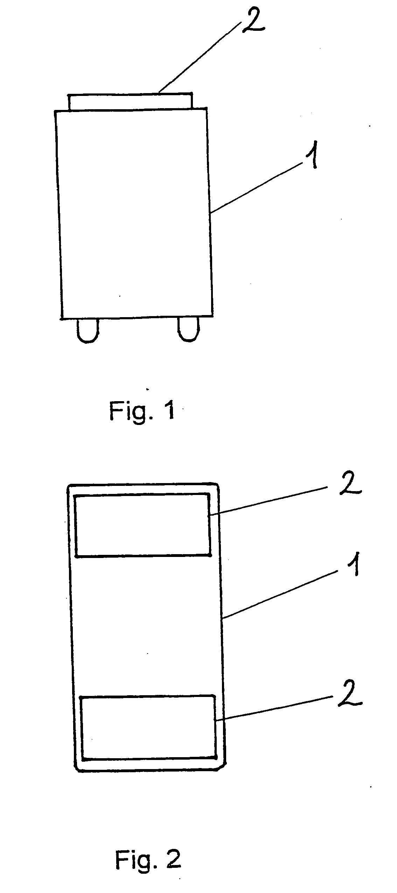

The Fig 1 shows the vehicle according to the invention equipped with the safety system from back view. One of the elements of the safety system of the vehicle, the sensor unit is placed inside the vehicle 1, which accurately detects the position of the vehicle 1, and if required it gives a signal to the lifting unit 2 placed on the upper part of the vehicle 1. The lifting structure 3 is housed in the lifting unit 2.

The Fig 2 shows the vehicle according to the invention equipped with the safety system from top view. The lifting units 2 placed on the top of the vehicle 1 with the lifting structures 3 placed inside can be seen in the figure. Two pieces of lifting unit 2 should be preferably placed on top of the vehicle 1, at the front and back of the vehicle 1 to ensure that during use they can return the vehicle 1 to the basic position smoothly. Depending on the type, and size of the vehicle and the weight to be lifted, in given case more than two lifting units 2 are required to be placed.

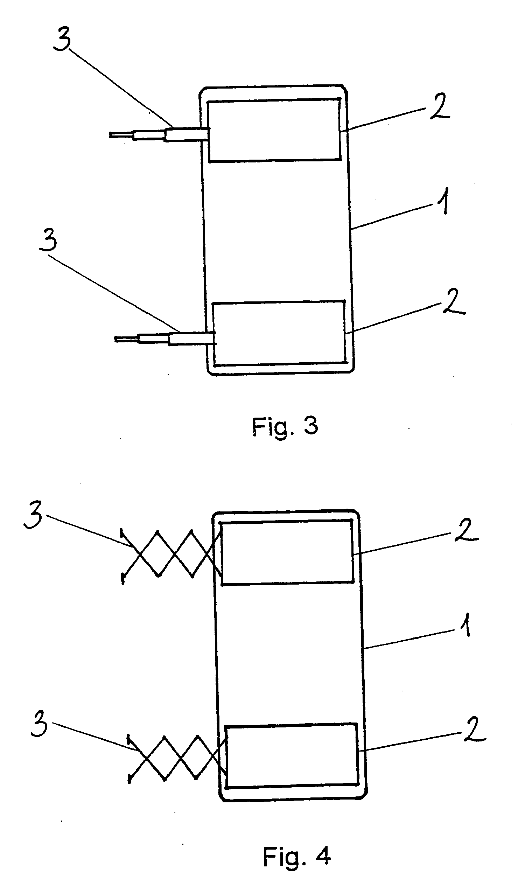

The Fig 3 shows a possible embodiment of the vehicle according to the invention equipped with the safety system from top view during the use of the lifting structure 3. The two pieces of lifting units 2 placed on the top of the vehicle 1 can be seen in the figure with the lifting structures 3 in extruded state. This case the lifting structure 3 is exemplified by hydraulic levers. In the lifting units 2 two lifting structures 3 are placed in each, ensuring that in case of the tilting of the vehicle 1 it can be tilted back from both directions.

The Fig 4 shows another possible embodiment of the vehicle according to the invention equipped with the safety system from top view during the use of the lifting structure 2. The two pieces of lifting units 2 placed on the top of the vehicle 1 can be seen in the figure with the lifting structures 3 in extruded state. This case the lifting structure 3 comprises of one or two mechanical levers connected to each other. In each of the lifting units 2 two lifting structures 3 are situated, ensuring that in case of the tilting of the vehicle 1, it can be tilted back from both directions.

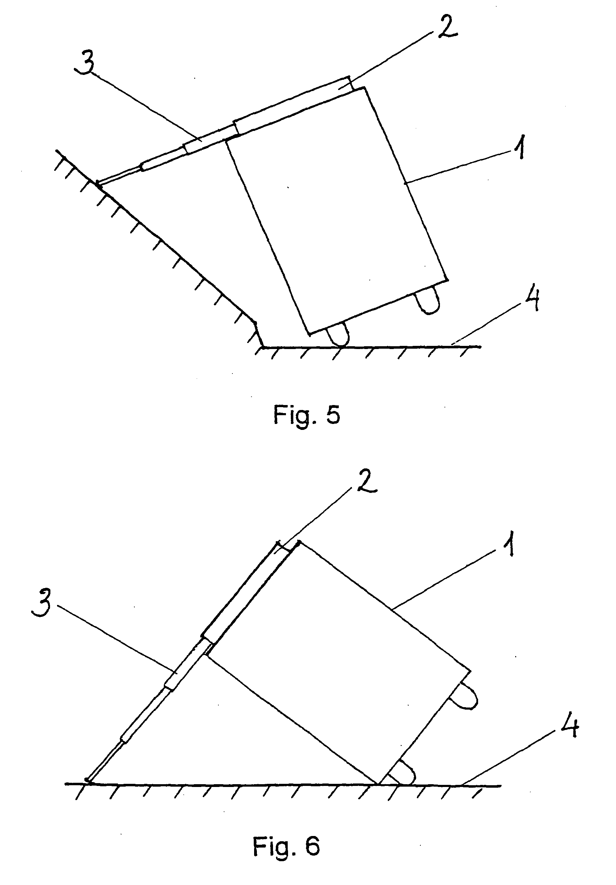

The Fig 5 shows a possible preferable embodiment of the solution according to the invention in case of a vehicle tilting towards a lesser-splayed part. In the figure the vehicle 1 off the track can be seen, leaning against the splayed part of the road. The sensor structure detecting the tilting of the vehicle 1 from the basic position, activates the movement of the lifting unit 2, by which the lifting structure 3, in given case a hydraulic lever, moves towards the splayed part. As soon as the lifting structure 3 pulls its weight towards the splayed part, the vehicle 1 is continuously pushed back to its basic position.

The Fig 6 shows another possible preferable embodiment of the solution according to the invention in case of a complete tilting towards the side, in side view. It can be seen in the figure, that in the position of a complete tilting towards the side of the vehicle 1 the sensor unit activates the lifting structure 3 of the lifting unit 2, the lifting structure 3 puts its weight toward the ground 4 and brings the vehicle 1 into a slanting position, which already makes it possible for the passengers to leave the vehicle, respectively to rescue the injured in an easier way.

In case of a preferable concrete embodiment of the solution according to the invention the safety system consists of two main parts operating aligned. On the one hand it consists of a sensor unit controlling the position of the vehicle and reacting to its change, as well as a second, lifting unit 2, which can be activated by the previously mentioned unit, which in given case includes a mechanical, or hydraulic lifting structure. On the top of the vehicle 1 minimum two lifting units 2 should be placed to ensure, that during application it can return the vehicle 1 to its basic position smoothly, without tilting. Depending on the type, and size of the vehicle and the weight to be lifted, in given case more than two lifting units 2 are required to be placed.

Operation of the lifting structure 3 can be pneumatic, hydraulic, or mechanical in case of a concrete realization. The pneumatic, hydraulic solutions can be connected to the existing pneumatic or hydraulic system of the vehicle, so installation during production or afterwards can be easily solved. Mechanical operation can be made by electric servo motor, worm wheel, or by gears and a rack connected with it. This case the electric motor is joined the electric system of the vehicle 1. The essence of both pneumatic, hydraulic, and electric operating solutions is that, that during the tilting of the vehicle these systems do not get damaged, so they can be made full use for the lifting or possible recovery of the vehicle.

The sensor system, built in the vehicle 1 to a safe place, starts operation immediately if the vehicle shifts from the normal position and tilts or tips out sideways, and taking up this position permanently, it gets into repose. The sensor unit automatically activates the second lifting units 2 of the system in this situation. Hydraulic or electric lifting structures 3 are placed in the lifting units 2 fixed reliably to the top of the vehicle 1 or close to the top fixed to the frame structure. The lifting structures 3 are located in such a way, that two lifting structures 3 are placed in each lifting unit 2 ensuring, that in case of the vehicle 1 tipping over, it can be tipped back from both directions.

The lifting unit 2 starts operation by control of the sensor unit. Moving outwards from the lateral plane of the vehicle, it lifts the vehicle tilted sideways from this position as a lever, in case of tilting of lesser angle, it tips back the vehicle on its wheels. Considering the fact, that the center of gravity of motor vehicles, coaches is relatively low, the lifting unit 2 fixed close to the top can work efficiently using relatively small power. In line with the operation of the lifting unit 2 in given case another structural element making use of the pushing force of the lifting unit 2 and moving together with it, can make force on the sideway windows in such a way, that crunching the glass of the vehicle 1 offers possibility for rescuing the passengers stuck in the vehicle already accessible. A structure preventing the slipping back of certain units of the lifting structure 3 is built in. It is preferable to provide the whole system with electric supply self-sufficing from the operation of the vehicle, in such a way, that the electric supply system together with the sensor unit is placed on the least vulnerable place of the vehicle in case of an accident.

The vehicle safety system according to the invention can be partially or fully built in posterior. In given case an easy-to-use window-breaking structure device can be made free from the system, simultaneously with the starting operation of the lifting structure placed in the longitudinal axis of the vehicle accessible from outside for the rescuers. It makes possible the getting out of the vehicle by pressure or dynamic impact on the windows.

The advantage of the vehicle safety system according to the invention is, that it offers possibility for safe access of the vehicle right after the accident from outside, from the side windows to ensure quick rescue of the passengers stuck inside, and in the above unexpected situation redeeming the absence of the auxiliary devices necessary for the rescue.

## Claims

1. Safety system for vehicles making possible, that in case of tipping over or tilting of vehicles, the system lifts the vehicle, respectively puts back the vehicle to its original position, wherein
the safety system for vehicles consists of a sensor unit monitoring the position of the vehicle and a lifting unit (2) controlled by the sensor unit, as well as a lifting structure (3) placed in the lifting unit (2),
the safety system being **characterised in that**,
the lifting unit (2) including the lifting structure (3) is placed on the upper part of the vehicle (1), preferably on the top of it, in given case it is fixed to its upper frame, and it is controlled by the sensor unit placed inside the vehicle (1).

2. Safety system for vehicles according to claim 1 **characterized by** that, each lifting unit (2) includes two lifting structures (3), that are placed on the right and left hand side of the longitudinal axis of the vehicle (1).

3. Safety system for vehicles according to claim 1 or 2 **characterized by** that, on the upper part, or to the top of the vehicle (1) two or more lifting units (2) in the longitudinal axis of the vehicle (1) are fixed.

4. Safety system for vehicles according to claim 1 **characterized by** that, operation of the lifting structure (3) is hydraulic, or mechanical or electric.

5. System according to claim 1 **characterized by** that, that the lifting structure (3) is realized by a telescopic system, and/or a mechanical lever consisting of one or more parts and joints.

## Patentansprüche

1. Sicherheitssystem für Fahrzeuge, das im Falle des Umkippens oder Umstürzens der Fahrzeuge ein Anheben des Fahrzeuges bzw. dessen Zurückstellen in seine ursprüngliche Position ermöglicht, wobei das Sicherheitssystem aus einer die Position des Fahrzeuges überwachenden Fühlereinheit und einer durch diese gesteuerte Hebeeinheit (2) sowie einer in der Hebeeinheit (2) angeordneten Hebevorrichtung (3) besteht, **dadurch gekennzeichnet, dass** die die Hebevorrichtung (3) umfassende Hebeeinheit (2) auf dem oberen Teil, vorzugsweise auf dem Dach des Fahrzeuges angeordnet ist, und sie ist gegebenenfalls an dessen oberen Rahmen befestigt und wird durch die im Inneren des Fahrzeuges (1) angeordnete Fühlereinheit gesteuert.

2. Sicherheitssystem für Fahrzeuge nach Anspruch 1, **dadurch gekennzeichnet, dass** jede Hebeeinheit (2) zwei Hebevorrichtungen (3) aufweist, die rechts und links von der Längsachse des Fahrzeuges (1) angeordnet sind.

3. Sicherheitssystem für Fahrzeuge nach Anspruch 1 oder 2, **dadurch gekennzeichnet, dass** auf dem oberen Teil oder dem Dach des Fahrzeuges (1) zwei oder mehrere Hebeeinheiten (2) in der Längsachse des Fahrzeuges (1) befestigt sind.

4. Sicherheitssystem für Fahrzeuge nach Anspruch 1, **dadurch gekennzeichnet, dass** die Betätigung der Hebevorrichtung (3) hydraulisch oder mechanisch oder elektrisch erfolgt.

5. Sicherheitssystem für Fahrzeuge nach Anspruch 1, **dadurch gekennzeichnet, dass** die Hebevorrichtung (3) in Form eines teleskopischen Systems und/oder eines aus einem oder mehreren Glied(ern) und Gelenk(en) bestehenden mechanischen Hebels ausgeführt ist.

## Revendications

1. Système de sécurité pour véhicules adapté pour lever le véhicule ou le remettre dans sa position originale en cas d'un renversement ou capotage des véhicules, ce système de sécurité pour véhicules consiste d'un capteur surveillant la position du véhicule et d'une unité de levage (2) commandée par le capteur ainsi que d'un dispositif de levage (3) arrangé dans l'unité de levage (2), ce système de sécurité étant **caractérisé en ce que** l'unité de levage (2) comprenant le dispositif de levage (3) est arrangée sur la partie supérieure, préférablement sur le toit du véhicule (1) et éventuellement elle est fixée sur le bâti supérieur du celui-ci, et elle est commandée par le capteur arrangé à l'intérieur du véhicule (1).

2. Système de sécurité pour véhicules selon la revendication 1, **caracterisé en ce que** chaque unité de levage (2) comprend deux dispositifs de levage (3) arrangés à droite et à gauche relativement à l'axe longitudinale du véhicule (1).

3. Système de sécurité pour véhicules selon la revendication 1 ou 2, **caracterisé en ce que** deux ou plusieurs unités de levage (2) sont fixées sur la partie supérieure ou sur le toit du véhicule (1) dans l'axe longitudinale du véhicule (1).

4. Système de sécurité pour véhicules selon la revendication 1, **caracterisé en ce que** le dispositif de levage (3) est actionné hydrauliquement ou mécaniquement ou éléctriquement.

5. Système de sécurité pour véhicules selon la revendication 1, **caracterisé en se que** le dispositif de levage (3) est réalisé par un système téléscopique et/ou un levier mécanique consistant d'un ou plusieurs membres et joints.
